# EUROPEAN PATENT SPECIFICATION

(11) **EP 1 776 910 B1**
(45) Date of publication and mention of the grant of the patent: **24.04.2013**
(21) Application number: 06291060.9
(22) Date of filing: 27.06.2006
(51) Int. Cl.: A47L 9/16, A47L 5/28

(54) **Multi-cyclone dust collector for vacuum cleaner**
Multizyklon-Staubsammler für Staubsauger
Collecteur poussière à cyclones multiples pour aspirateur

(30) Priority: 24.11.2005 KR 20050113033; 19.10.2005 US 728108 P
(43) Date of publication of application: 25.04.2007
(73) Proprietor: Samsung Electronics Co., Ltd., Suwon-si, Gyeonggi-do, 443-742 (KR)
(72) Inventor: Kim, Tak-soo, Gwangsan-gu Gwangju-city (KR)
(74) Representative: Blot, Philippe Robert Emile

(56) References cited:
- EP-A- 0 018 197
- EP-A- 1 371 318
- WO-A-03/030702
- CN-A- 1 548 245
- DE-A1-102004 028 678
- DE-U1- 20 306 405
- GB-A- 2 360 719
- SE-L- 9 601 771
- US-A1- 2002 116 907
- US-A1- 2004 194 250

## Description

### CROSS-REFERENCE TO RELATED APPLICATIONS

This application claims the benefit of U.S. provisional application No. 60/728,108, filed October 19, 2005, in the United States Patent & Trademark Office, and claims the benefit of Korean Patent Application No. 2005-0113033 filed November 24, 2005, in the Korean Intellectual Property Office, the disclosure of both of which are incorporated herein by reference.

### BACKGROUND OF THE INVENTION

### 1. Field of The Invention

The present invention relates to a vacuum cleaner. More particularly, the present invention relates to a multi-cyclone dust collector for a vacuum cleaner that separates and collects contaminants from air through two steps and more. Such multi-cyclone dust collectors are for example disclosed in documents GB 2 360 719, WO 03/030702, US 2004/194250, DE 1020040286678 and EP 0018197.

### 2. Description of The Related Art

Generally, a cyclone dust collector is an at that forces fluid such as air to whirl, and then, collects contaminants that are separated from the whirling fluid by centrifugal force. Nowadays, cyclone dust collectors are widely used for contaminants collecting apparatus of vacuum cleaners.

A conventional cyclone dust collector for a vacuum cleaner includes a cyclone body in which sucked air whirls, and a contaminants collecting receptacle that is connected to the cyclone body so as to collect contaminants separated from the sucked air.

However, the conventional cyclone dust collector certainly generates noise due to air that whirls inside the cyclone body. Therefore, a vacuum cleaner having the conventional cyclone dust collector generates both of a basic noise that is generated when the conventional vacuum cleaner operates and a cyclone noise that is generated by the conventional cyclone dust collector. As a result, the vacuum cleaner having the conventional cyclone dust collector generates considerable noise when in use.

On the other hand, a multi-cyclone dust collector employing a plurality of cyclones have been developed for increasing contaminants collecting efficiency. A conventional multi-cyclone dust collector includes a first cyclone that separates relatively large contaminants from sucked air, a plurality of second cyclones that whirls air being discharged from the first cyclone so as to centrifugally remove fine contaminants that are not removed in the first cyclone, and a first and a second contaminants receptacle that are corresponded to each of the first and second cyclones so as to collect contaminants discharged from each of the first and second cyclones.

The conventional multi-cyclone dust collector has a complex structure because of employing a plurality of cyclones. Therefore, it is difficult to manufacture the conventional multi-cyclone dust collector and to empty contaminants that are collected in each of the first and second contaminants receptacles.

Furthermore, in the conventional multi-cyclone dust collector, most of contaminants that are separated from sucked air are collected in the first contaminants receptacle, but a user cannot see the contaminants that are collected in the first contaminants receptacle at the outside thereof due to the structure of the conventional multi-cyclone dust collector. Therefore, it is inconvenient for a user to manage the multi-cyclone dust collector.

Also, the conventional multi-cyclone dust collector has a tall height because the first contaminants receptacle is disposed under the first cyclone. Therefore, it is necessary to develop a multi-cyclone dust collector having a lower height than the conventional multi-cyclone dust collector.

### SUMMARY OF THE INVENTION

The present invention has been developed in order to overcome the above drawbacks and other problems associated with the conventional arrangement. An aspect of the present invention is to provide a multi-cyclone dust collector for a vacuum cleaner having higher contaminants collecting efficiency and a more compact structure than those of the conventional multi-cyclone dust collector.

Another aspect of the present invention is to provide a multi-cyclone dust collector for a vacuum cleaner that noise is lower upon operating.

The above aspect and/or other feature of the present invention can substantially be achieved by providing a multi-cyclone dust collector for a vacuum cleaner, which includes a first cyclone forcing outside air that is sucked at a lower portion of the first cyclone to form an upwardly whirling air current so as to centrifugally separate contaminants from the outside air; a first contaminants chamber wrapping around some part of the first cyclone, the first contaminants chamber collecting contaminants discharged from the first cyclone; and a second cyclone unit wrapping around some part of the first cyclone, the second cyclone unit employing a plurality of second cyclones of which each sucks air discharged from the first cyclone at an upper portion of each of the plurality of second cyclones so as to centrifugally separate fine contaminants from the air.

At this time, it is preferable that the first contaminants chamber wraps around the second cyclone unit.

According to an embodiment of the present invention, the first cyclone includes a first cyclone body being formed in a substantially hollow cylindrical shape for the outside air to whirl inside the first cyclone body; an air communicating member being disposed at an upper side of the first cyclone body, the air communicating member discharging semi-clean air having contaminants removed to the plurality of second cyclones; and an air suction port being disposed at the lower portion of the first cyclone body, the air suction port forming the outside air an upwardly whirling air current.

According to an embodiment of the present invention, the air communicating member includes an air communicating pipe being formed in a substantially hollow cylindrical shape with opposite opened ends; and a plurality of air guiding parts being connected to a top end of the air communicating pipe, the plurality of air guiding parts forming a plurality of air flowing ways corresponding to the plurality of second cyclones.

Furthermore, a guiding protrusion is preferably disposed at a center of the top end of the air communicating member.

According to an embodiment of the present invention, the second cyclone unit further comprises a second contaminants chamber that is disposed under the plurality of second cyclones so as to collect fine contaminants discharged from each of the plurality of second cyclones.

At this time, the second contaminants chamber is preferably formed as a space between the first cyclone and a partition, which wraps around the plurality of second cyclones at the outside and opposite side ends of which are connected to the first cyclone. The first contaminants chamber is formed as a space between the partition, an outside receptacle that wraps around entirely the plurality of second cyclones and the first cyclone, and some part of a circumferential surface of the first cyclone that is not wrapped around by the partition.

Furthermore, the multi-cyclone dust collector further includes a bottom cover detachably mounting on a bottom end of each of the first cyclone, the first contaminants chamber, and the second cyclone unit.

According to another embodiment of the present invention, a multi-cyclone dust collector for a vacuum cleaner includes a first cyclone forcing outside air that is sucked at a lower portion of the first cyclone to form an upwardly whirling air current so as to centrifugally separate contaminants from the outside air; a second cyclone unit wrapping around some part of the first cyclone, the second cyclone unit employing a plurality of second cyclones of which each sucks air discharged from an upper side of the first cyclone, and then, forms the air a downwardly whirling air current so as to centrifugally separate fine contaminants from the air; and a first contaminants chamber wrapping around entirely the first cyclone and the second cyclone unit, the first contaminants chamber collecting contaminants discharged from the first cyclone.

According to an embodiment of the present invention, the first cyclone comprises a plurality of cyclones.

According to an embodiment of the present invention, each of the plurality of second cyclones comprises a second cyclone body, wherein a bottom end of the second cyclone body is inclined in a direction of the first cyclone with respect to a top end of the second cyclone body.

Furthermore, the multi-cyclone dust collector further includes a partition wrapping around under portions of the plurality of second cyclones along the first cyclone in a side of the plurality of second cyclones.

According to still another embodiment of the present invention, a multi-cyclone dust collector for a vacuum cleaner, includes at least one first cyclone sucking outside air so as to separate contaminants from the outside air; a second cyclone unit wrapping around some circumferential surface of the at least one first cyclone, the second cyclone unit having at least one second cyclone and a second contaminants chamber; and a first contaminants chamber wrapping around the circumferential surface of the first cyclone and the second cyclone unit, the first contaminants chamber collecting contaminants discharged from the first cyclone. The first cyclone sucks the outside air to whirl, discharges contaminants that are separated from the outside air to the first contaminants chamber through an opened top end of the first cyclone, and discharges clean air having contaminants removed to an upper side of the first cyclone.

At this time, the at least one second cyclone sucks air that is discharged from the first cyclone at an upper portion of the second cyclone to whirl, discharges fine contaminants separated from the air through an opened bottom end of the second cyclone, and discharges clean air having fine contaminants removed to an upper portion of the second cyclone.

Furthermore, a contaminants discharging opening is formed at a top end of the circumferential surface of the first cyclone that is not wrapped around by the plurality of second cyclones for discharging contaminants from the first cyclone.

According to yet another embodiment of the present invention, a multi-cyclone dust collector for a vacuum cleaner, includes at least one first cyclone sucking outside air so as to separate contaminants from the outside air; and at least one second cyclone centrifugally separating fine contaminants from air that is discharged from the at least one first cyclone; wherein the at least one first cyclone has a plurality of air suction ports through which the outside air enters the at least one first cyclone.

At this time, the plurality of air suction ports is disposed at a bottom surface of the first cyclone, wherein the outside air enters into the first cyclone through the plurality of air suction ports.

According to an embodiment of the present invention, each of the plurality of air suction ports is formed in a helical pipe shape and has a same helical direction.

According to another embodiment of the present invention, a multi-cyclone dust collector for a vacuum cleaner, includes a cyclone main body, an upper cover, and a bottom cover. The cyclone main body comprises at least one first cyclone; a first contaminants chamber collecting contaminants separated in the at least one first cyclone; a plurality of second cyclones disposed around the first cyclone; a second contaminants chamber collecting contaminants discharged from each of the plurality of second cyclones; and an air communicating member guiding air that is discharged from the first cyclone to each of the plurality of second cyclones.

The upper cover has a plurality of air-discharging pipes corresponding each of the plurality of second cyclones, and is disposed at a top end of the cyclone main body. The bottom cover has at least one air suction port through which outside air enters the at least one first cyclone, and is detachably mounted at a bottom end of the cyclone main body.

At this time, it is preferable that the at least one first cyclone, the first contaminants chamber, the plurality of second cyclones, and the second contaminants chamber are molded in one body by injection molding process.

Furthermore, the at least one air-suction port is preferably formed in a substantially helical shape.

According to an embodiment of the present invention, the at least one first cyclone has a cylindrical first cyclone body, each of the plurality of second cyclones has a second cyclone body with a reversed substantially conical shape, and at least one of the plurality of second cyclone bodies shares some part thereof with the first cyclone body.

With the multi-cyclone dust collector for a vacuum cleaner according to an embodiment of the present invention, the plurality of second cyclones and the first contaminants chamber are disposed around the first cyclone body so that a compact multi-cyclone dust collector can be provided. Especially, a height of the multi-cyclone dust collector is lower than a height of the conventional multi-cyclone dust collector.

Furthermore, with the multi-cyclone dust collector according to an embodiment of the present invention, the first contaminants chamber is arranged to wrap around the first cyclone and the second cyclone unit so that it is reduced noise that is transmitted from each of the first cyclone and the plurality of second cyclones to the outside of the multi-cyclone dust collector. Accordingly, noise of the multi-cyclone dust collector when in use is decreased.

Also, the multi-cyclone dust collector according to an embodiment of the present invention has a higher contaminants collecting efficiency than the conventional multi-cyclone dust collector, because entering air does not collide with discharging air inside the first cyclone.

According to the multi-cyclone dust collector as described above, relatively large contaminants are separated when the contaminants-laden air passes through the first cyclone, and fine contaminants are separated when the air passes through the second cyclone unit in succession. Therefore, contaminants collecting efficiency for fine contaminants is increased.

Furthermore, with the multi-cyclone dust collector according to an embodiment of the present invention, each of the first cyclone and the second cyclone unit has a space in which contaminants are collected isolated from a space in which a whirling air current is formed. Therefore, contaminants collecting efficiency is increased.

According to the multi-cyclone dust collector as described above, the number of parts and time for assembling the multi-cyclone dust collector can be reduced because the first cyclone body, the air communicating pipe, the plurality of second cyclone bodies, the partition, and the outside receptacle can be molded in a single body by injection molding process. Therefore, manufacturing cost decreases.

Furthermore, with the multi-cyclone dust collector according to an embodiment of the present invention, the first contaminants chamber is formed to wrap around the second cyclone unit so that the volume of the first contaminants chamber can be large as much as possible.

Also, with the multi-cyclone dust collector according to an embodiment of the present invention, the first contaminants chamber is disposed outside the second contaminants chamber and the outside receptacle is made from transparent material so that a user can check out the amount of contaminants that are collected in the first contaminants chamber. Furthermore, when opening the bottom cover of the multi-cyclone dust collector, a user can empty all contaminants collected in both the first and second contaminants chambers. Therefore, it is easy for a user to manage the multi-cyclone dust collector.

Other objects, advantages and salient features of the invention will become apparent from the following detailed description, which, taken in conjunction with the annexed drawings, discloses preferred embodiments of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:

Fig. 1 is a perspective view illustrating a multi-cyclone dust collector for a vacuum cleaner according to an embodiment of the present invention;

Fig. 2 is an exploded perspective view illustrating the multi-cyclone dust collector of Fig. 1;

Fig. 3 is a sectional view of Fig. 1 taken along a line III-III in Fig. 2;

Fig. 4 is a bottom perspective view illustrating an upper cover of Fig. 1;

Fig. 5 is a bottom perspective view illustrating the multi-cyclone dust collector of Fig. 1 with a bottom cover removed;

Fig. 6 is a sectional view illustrating a multi-cyclone dust collector for a vacuum cleaner according to another embodiment of the present invention;

Fig. 7 is a partial perspective view illustrating a grill member of Fig. 6;

Fig. 8 is a sectional view illustrating the multi-cyclone dust collector of Fig. 1 when emptying contaminants; and

Fig. 9 is a view illustrating an example of a vacuum cleaner having a multi-cyclone dust collector according to the present invention.

Throughout the drawings, like reference numerals will be understood to refer to like parts, components and structures.

### DETAILED DESCRIPTION OF THE EXEMPLARY EMBODIMENTS

Hereinafter, certain exemplary embodiments of the present invention will be described in detail with reference to the accompanying drawings.

The matters defined in the description, such as a detailed construction and elements thereof, are provided to assist in a comprehensive understanding of the invention. Thus, it is apparent that the present invention may be carried out without those defined matters. Also, well-known functions or constructions are omitted to provide a clear and concise description of exemplary embodiments of the present invention.

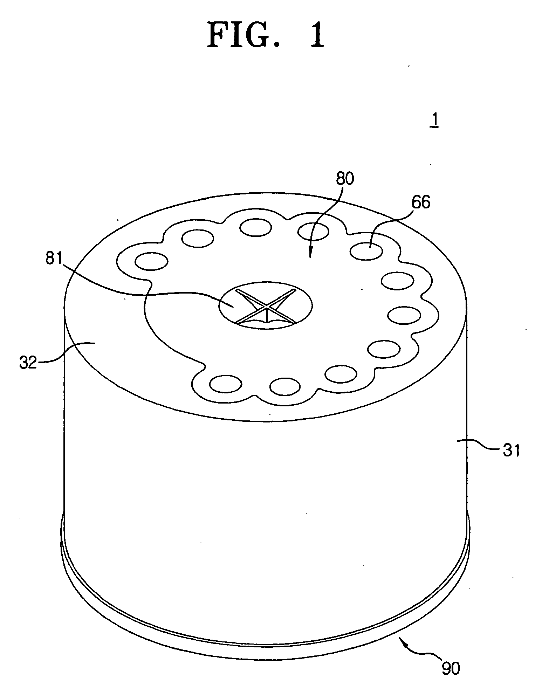

Referring to Figs. 1 to 3, a multi-cyclone dust collector 1 for a vacuum cleaner according to an embodiment of the present invention includes a first cyclone 10, a first contaminants chamber 30, and a second cyclone unit 50.

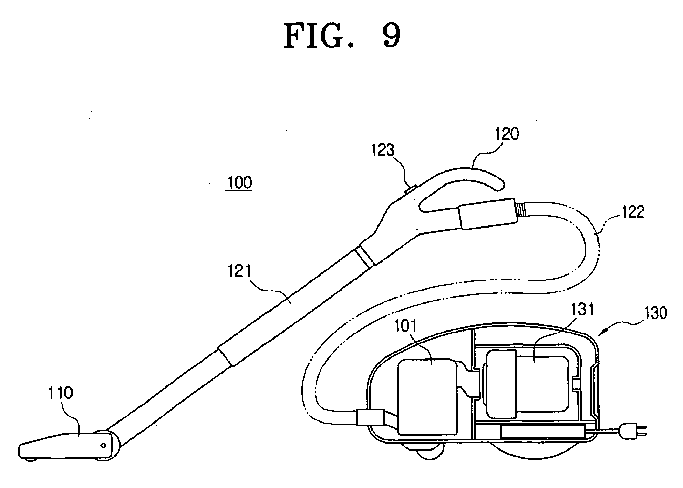

The first cyclone 10 takes outside air, which is sucked from a suction brush 110 (see Fig. 9) and contains contaminants such as dust or dirt (hereinafter referred to as contaminants-laden air), at a lower portion of the first cyclone 10, and forces the contaminants-laden air to upwardly whirl so that contaminants are separated from the contaminants-laden air by centrifugal force operating upon the whirling contaminants-laden air. In other words, the first cyclone 10 draws-in contaminants-laden air through a bottom surface of the first cyclone 10 and forms the contaminants-laden air into an upwardly whirling air current so that it centrifugally separates contaminants from the contaminants-laden air, and then, discharges the separated contaminants into a first contaminants chamber 30 through an opened top end of the first cyclone 10. The first cyclone 10 discharges semi-cleaned air having contaminants removed into the second cyclone unit 50 through an upper portion the first cyclone 10. The first cyclone 10 may have a plurality of cyclones, but the first cyclone 10 according to this embodiment of the present invention has one cyclone.

The first cyclone 10 according to an embodiment of the present invention includes a first cyclone body 20, an air communicating member 40, and two (2) air suction ports 45.

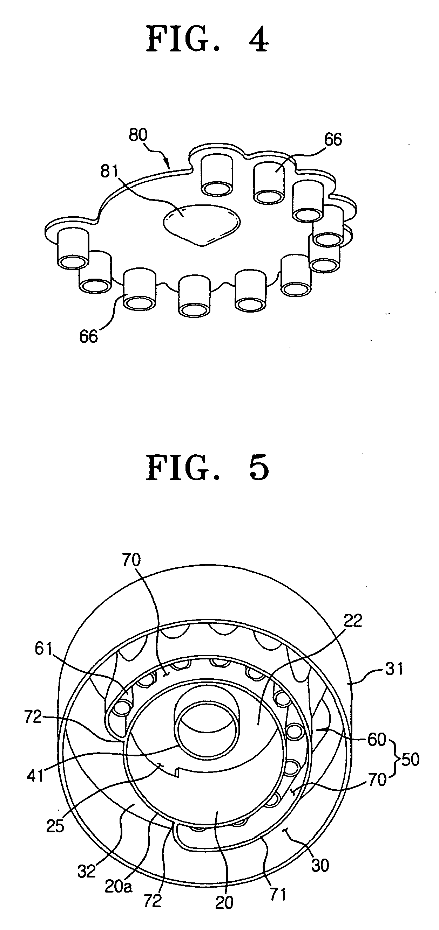

The first cyclone body 20 is formed in a substantially hollow cylindrical shape. Contaminants-laden air enters at a lower portion of the first cyclone body 20 through the air suction ports 45, and then, forms an upwardly whirling air current inside the first cyclone body 20. A contaminants discharging opening 25 is formed between a top end of the first cyclone body 20 and a top surface 22. The contaminants discharging opening 25 is formed at a part 20a of the first cyclone body 20 that is not wrapped around by a plurality of second cyclones 60 (see Fig. 5). The contaminants are separated from contaminants-laden air by centrifugal force operating upon the upwardly whirling air current, and then, are discharged from the first cyclone body 20 through the contaminants discharging opening 25. It is preferable that the contaminants discharging opening 25 is formed in a substantially band shape.

The air communicating member 40 discharges air, which has comparatively large contaminants removed from contaminants-laden air by centrifugal force in the first cyclone body 20 (hereinafter, referred to as semi-clean air), to the second cyclone unit 50. The air communicating member 40 has an air communicating pipe 41 and a plurality of air guiding parts 42. The air communicating pipe 41 is formed in a substantially hollow cylindrical shape, and projects downwardly on a center of the top surface 22 of the first cyclone body 20. The air communicating pipe 41 is spaced apart from the air suction ports 45 with opposite opened ends. A top end of the air communicating pipe 41 is in fluid communication with a plurality of air flowing ways 43. The plurality of air flowing ways 43 is formed by the plurality of air guiding parts 42 of the top surface 22 of the first cyclone body 20. The air guiding parts 42 are substantially arranged in the shape of a letter "C" based on the air communicating pipe 41. An air inlet 65 is formed at a point which the air flowing way 43 meets a second cyclone body 61. Therefore, the semi-clean air, which enters through a bottom end of the air communicating pipe 41, enters each of the plurality of second cyclones 60 through the plurality of air flowing ways 43 and the plurality of air inlets 65.

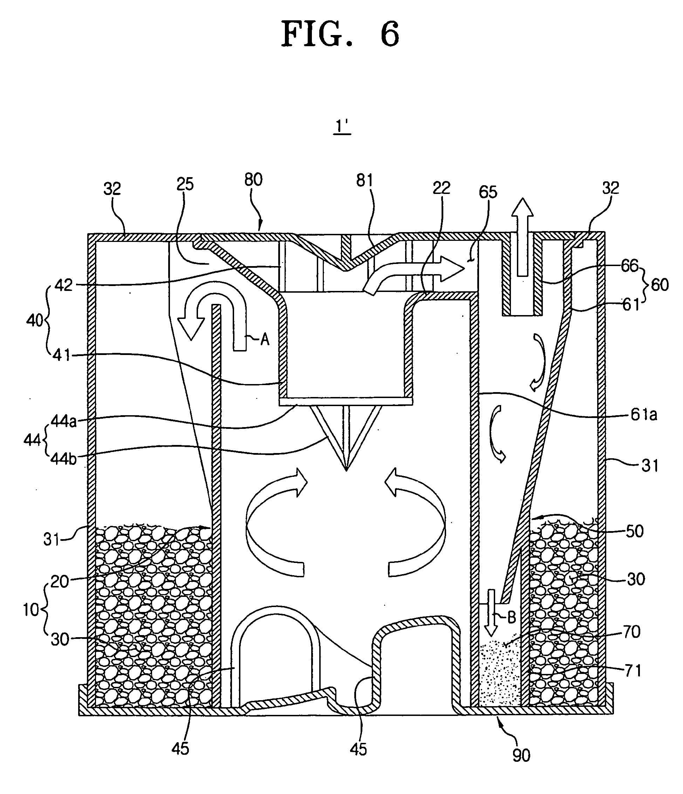

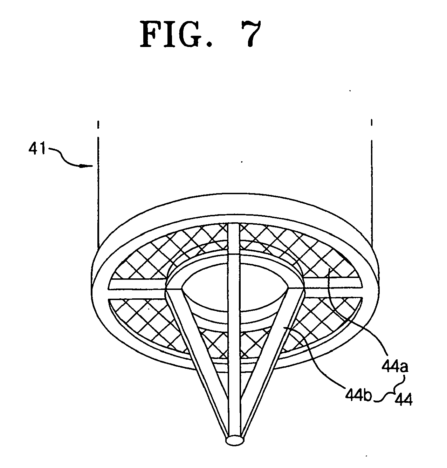

The multi-cyclone dust collector 1 for the vacuum cleaner according to this embodiment has the air communicating pipe 41 of the air communicating member 40 with an opened bottom end. The multi-cyclone dust collector 1' for the vacuum cleaner according to another embodiment of the present invention may include a grill member 44 that is disposed on the bottom end of the air communicating pipe 41 as shown in Fig. 6. Referring to Figs. 6 and 7, the grill member 44 includes a grill plate 44a that is mounted on the bottom end of the air communicating pipe 41 and is formed in a substantially mesh shape, and a projection part 44b that protruds downwardly from a center of the grill plate 44a and is formed in a substantially quadrangular pyramid. The grill member 44 can block relatively large contaminants from being discharged into the air communicating pipe 41 with the semi-clean air. At this time, the projection part 44b prevents the grill member 44 from being clogged by contaminants.

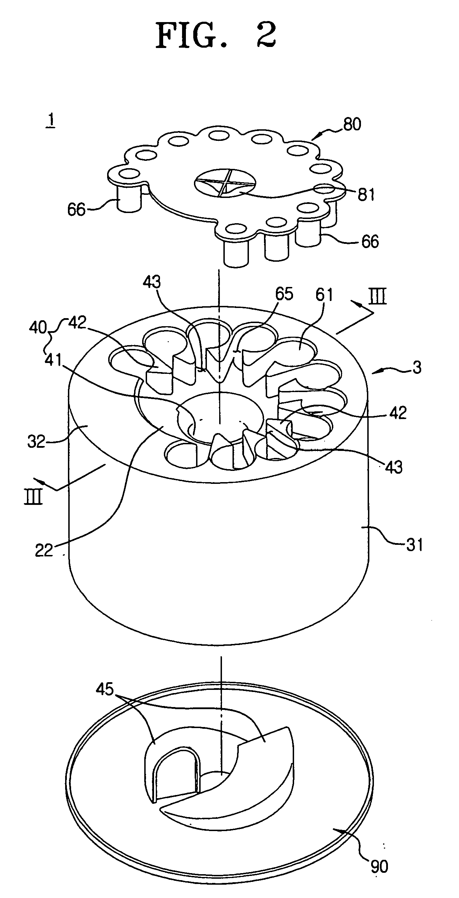

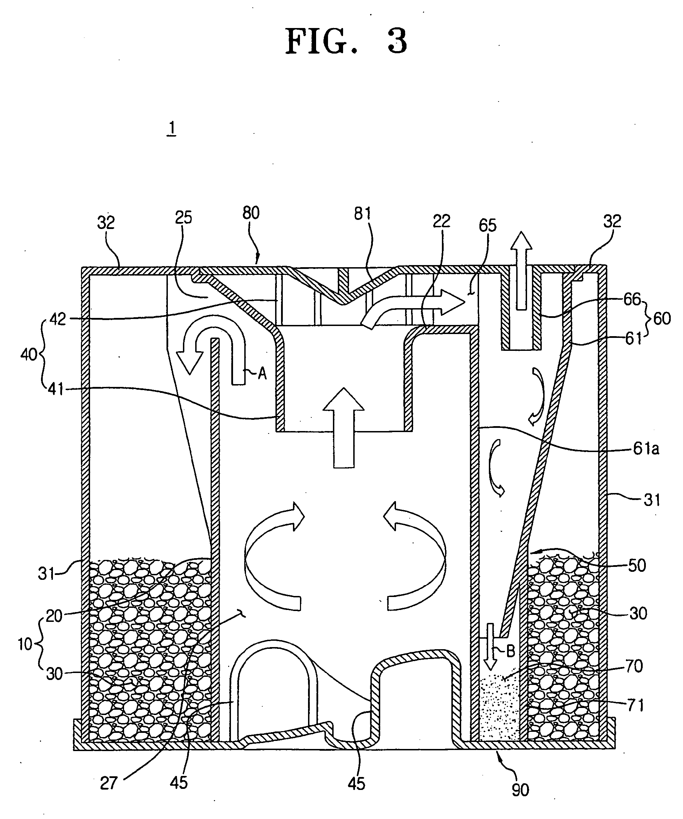

The two (2) air suction ports 45 are in fluid communication with the suction brush 110, and are formed at a lower portion of the first cyclone body 20 so that contaminants-laden air sucked in the first cyclone body 20 forms the upwardly whirling air current. The air suction ports 45 are formed on a bottom cover 90 that covers the bottom end of the first cyclone body 20 in a substantially helical pipe with an upward slope. In other words, each of the air suction ports 45 are formed as an air suction pipe having a substantially helical pipes shape. Therefore, contaminants-laden air that enters through the air suction ports 45 forms an upwardly whirling air current inside the first cyclone body 20. Although the multi-cyclone dust collector 1 according to this embodiment has two (2) air suction ports that are bent in a same direction as shown in Figs 2 and 3, a multi-cyclone dust collector (not shown) according to another embodiment of the present invention may have one air suction port.

The first contaminants chamber 30 is formed to wrap around a circumferential surface of the first cyclone 10, that is, some part 20a of the first cyclone body 20, and collects contaminants that are separated in the first cyclone 10 by centrifugal force and are discharged through the opened top end of the first cyclone 10, that is, the contaminants discharging opening 25. Referring Fig. 5, the first contaminants chamber 30 is formed as a space between an outside receptacle 31, a partition 71 that wraps around the plurality of second cyclones 60, and a part 20a of the first cyclone body 20 that is not wrapped around by the plurality of second cyclones 60. The outside receptacle 31 is formed in a substantially hollow cylindrical shape so as to wrap totally around the first cyclone body 20 and the second cyclone unit 50. Therefore, the first contaminants chamber 30 wraps around a circumferential surface of a second contaminants chamber 70 and some part 20a of the circumferential surface of the first cyclone body 20. Some area of the first contaminants chamber 30 is directly in fluid communication with the first cyclone body 20 so that the first contaminants chamber 30 can collect contaminants being discharged from the top end of the first cyclone body 20. An upper side of the first contaminants chamber 30 is closed by an upper surface 32 of the outside receptacle 31, and a bottom side of the first contaminants chamber 30 is closed by the bottom cover 90 that covers the bottom end of the first cyclone body 20. Preferably, at least some part of the outside receptacle 31 is made from transparent material so that a user can check out contaminants that are collected in the first contaminants chamber 30 without opening the bottom cover 90.

The second cyclone unit 50 takes the semi-clean air that is discharged from the upper portion of the first cyclone 10, and forces the semi-clean air to enter through an upper portion of the second cyclone unit 50 and to whirl downwardly so that fine contaminants are separated from the semi-clean air by centrifugal force operating upon the whirling semi-clean air. Then, the second cyclone unit 50 discharges clean air to a vacuum generator 131 (see Fig. 9). Thus, the semi-clean air contains fine contaminants that have not removed in the first cyclone 10, and the second cyclone unit 50 removes fine contaminants remaining in the semi-clean air by centrifugal force.

Referring to Figs. 3 and 5, the second cyclone unit 50 includes the plurality of second cyclones 60 and the second contaminants chamber 70.

The plurality of second cyclones 60 wrap around some part of the first cyclone 10, and forces the semi-clean air discharged from the first cyclone 10 to be sucked into the upper portion of each of the plurality of second cyclones 60 and to form a downwardly whirling semi-clean air current. Fine contaminants are centrifugally separated from the semi-clean air by centrifugal force operating upon the whirling semi-clean air, and then, clean air is discharged from the plurality of second cyclones 60 to the vacuum generator 131. At this time, the plurality of second cyclones 60 are disposed to wrap around some part of the first cyclone body 20 in the outside of the first cyclone body 20 as shown in Figs. 3 and 5. In this embodiment, eleven (11) second cyclones are arranged along the first cyclone body 20 substantially in the shape of a letter "C". The contaminants discharging opening 25 is formed at a top end of the part 20a of the first cyclone body 20 that is not wrapped around by the plurality of second cyclones 60 so that contaminants are discharged from the first cyclone 10 through the contaminants discharging opening 25 and are collected in the first contaminants chamber 30.

Each of the plurality of second cyclones 60 includes a second cyclone body 61 and an air-discharging pipe 66. The second cyclone body 61 is formed in a substantially hollow truncated conical shape having a diameter that decreases from a top end to a bottom end, that is, in a reversed conical shape. Also, the top end and the bottom end of the second cyclone body 61 are opened. A part 61 a of each of the plurality of second cyclone bodies 61 that faces on the first cyclone 10 is parallel to the first cyclone body 10 as shown in Figs. 3 and 5. Therefore, the bottom end of each of the plurality of second cyclone bodies 61 is inclined in a direction of the first cyclone body 20 with respect to the top end of each of the plurality of second cyclone bodies 61. In this embodiment, some part of the first cyclone body 20 shares with some part 61a of each of the second cyclone bodies 61. The top end of each of the plurality of second cyclone bodies 61 is abutted on the top end of the next second cyclone body 61. Each of the plurality of second cyclone bodies 61 has a shorter length than the first cyclone body 20. An upper side of the plurality of second cyclone bodies 61 is in fluid communication with the first cyclone 10 via the air communicating member 40. Therefore, the semi-clean air discharged to the air communicating pipe 41 enters in each of the second cyclone bodies 61 through each of the plurality of air flowing ways 43 and each of the plurality of air inlets 65, and then, forms an downwardly whirling air current inside each of the second cyclone bodies 61.

The air-discharging pipe 66 is projected downwardly on a center of the top end of the second cyclone body 61, and is in fluid communication with the vacuum generator 131. The air-discharging pipe 66 is formed in a substantially hollow cylindrical shape with opposite opened ends. A bottom end of the air-discharging pipe 66 is located at a higher position than the bottom end of the second cyclone body 61. Therefore, clean air that has fine contaminants removed inside the second cyclone body 61 by centrifugal force is discharged to the vacuum generator 131 through the air-discharging pipe 66. Even though not shown, an air gathering member may be disposed above the plurality of air-discharging pipes 66 so that the air gathering member gathers air being discharged from each of the plurality of air-discharging pipes 66 to flow to the vacuum generator 131.

The second contaminants chamber 70 is formed as a space between the first cyclone body 20 and a partition 71 for collecting fine contaminants that are discharged from the plurality of second cyclones 60. The partition 71 wraps around the plurality of second cyclones 60 from the outside, of which opposite side ends are connected to the first cyclone body 20 as shown in Fig. 5. That is, the second contaminants chamber 70 is formed to wrap around some part of circumferential surface of the first cyclone 10. At this time, it is preferable that the partition 71 is disposed to wrap around an under portion of the plurality of second cyclone bodies 61 as shown in Fig. 3. Then, an upper portion of each of the plurality of second cyclone bodies 61 is projected into the first contaminants chamber 30. Both of the partition 71 and a part 20a of the first cyclone body 20 that is not wrapped around by the partition 71 form a sidewall of the first contaminants chamber 30. Also, both of a bottom end of the second contaminants chamber 70 and a bottom end of the first contaminants chamber 30 are closed by the bottom cover 90. Therefore, fine contaminants that are discharged from the opened bottom end of each of the second cyclone bodies 61 are collected a space between the first cyclone body 20 and the partition 71 on the bottom cover 90.

The upper cover 80 is mounted on both of the plurality of air guiding parts 42 and the plurality of second cyclone bodies 61. The upper cover 80 forms the plurality of air flowing ways 43 with the plurality of air guiding parts 42, and forms a upper surface of each of the plurality of second cyclone bodies 61. Referring to Fig. 4, the upper cover 80 has the plurality of air-discharging pipes 66 and a guiding protrusion 81. The guiding protrusion 81 is formed in a substantially conical shape on a center of the upper cover 80 so as to guide the semi-clean air that is discharged through the air communicating pipe 41 into each of the plurality of air flowing ways 43. It is easy to manufacture the multi-cyclone dust collector 1 if the upper cover 80, the plurality of air-discharging pipes 66, and the guiding protrusion 81 are molded in a single body by injection molding process.

The bottom cover 90 is mounted on the bottom ends of the first cyclone body 20, the partition 71, and the outside receptacle 31 so that the bottom cover 90 forms bottom surfaces of the first cyclone body 20, the first contaminants chamber 30, and the second contaminants chamber 70. The 2 air suction ports 45 are formed on a center of the bottom cover 90 as shown in Fig. 2. Preferably, the bottom cover 90 is disposed to mount on or separate from the outside receptacle 31.

The multi-cyclone dust collector 1 according to this embodiment of the present invention is formed by three (3) injection molding elements as shown Fig. 2. In other words, the multi-cyclone dust collector 1 according to this embodiment includes a cyclone main body 3, the upper cover 80, and the bottom cover 90. The cyclone main body 3 is an injection molding element that the first cyclone body 20, the air communicating member 40, the plurality of second cyclone bodies 61, the outside receptacle 31, and the partition 71 are formed in a single body by the injection molding process. The upper cover 80 is formed in a single body with the plurality of air-discharging pipes 66, and the bottom cover 90 is formed in a single body with the 2 air suction ports 45. If the multi-cyclone dust collector 1 is formed by the three (3) injection molding elements as described above, the number of elements and time for assembling the multi-cyclone dust collector is reduced so that manufacturing cost is decreased.

Hereinafter, operation and function of the multi-cyclone dust collector 1 for the vacuum cleaner according to an embodiment of the present invention is described in detail with reference to accompanying drawings.

Upon turning on the vacuum cleaner, the vacuum generator 131 (see Fig. 9) operates to generate a suction force. The suction brush 110 (see Fig. 9) sucks contaminants-laden air from a cleaning surface by the suction force. The contaminants-laden air that is sucked in the suction brush 110 moves to the multi-cyclone dust collector 1 in fluid communication with the suction brush 110 via one or more communicating members 121 and 122 (see Fig. 9).

The contaminants-laden air that is moved to the multi-cyclone dust collector 1 enters into the first cyclone body 20 through the two (2) air suction ports 45. The contaminants-laden air that enters through the air suction ports 45 whirls inside the first cyclone body 20 to form an upwardly whirling air current. At this time, the contaminants-laden air easily forms the upwardly whirling air current due to the helical shape of the air suction ports 45. Then, contaminants are separated from the contaminants-laden air whirling upwardly by centrifugal force. The separated contaminants are discharged into and are collected in the first contaminants chamber 30 through the contaminants discharging opening 25 between the top end of the first cyclone body 20 and the top surface 22 of the first cyclone body 20 as illustrated by arrow A in Fig. 3. At this time, the first contaminants chamber 30 is formed to wrap around the second cyclone unit 50 so that it can collect a lot of contaminants. Also, at least some part of the outside receptacle 31 is made from transparent material so that a user can check out the amount of contaminants collected in the first contaminants chamber 30 from the outside. Because the first contaminants chamber 30 is isolated from a space 27 in which the upwardly whirling air current is formed by the first cyclone body 20, the upwardly whirling air current inside the first cyclone body 20 is not affected by the contaminants collected in the first contaminants chamber 30. Furthermore, air that forms the upwardly whirling air current inside the first cyclone body 20 is directly discharged to an upper side of the first cyclone body 20 through the air communicating pipe 41 so that the discharging air does not collide with contaminants-laden air that enters into the lower portion of the first cyclone body 20 through the air suction ports 45. Therefore, contaminants collecting efficiency of the multi-cyclone dust collector 1 is increased.

Furthermore, when the grill member 44 is disposed on the bottom end of the air communicating pipe 41, the grill member 44 prevents relatively large contaminants from being discharged through the air communicating pipe 41 with the semi-clean air. Then, it is prevented that the plurality of air flowing ways 43 of the air communicating member 40 is clogged with relatively large contaminants.

The semi-clean air that has contaminants removed in the first cyclone body 20 enters into the bottom end of the air communicating pipe 41, and then, flows to the top end of the air communicating pipe 41. The semi-clean air that is passed through the air communicating pipe 41 collides against the guiding protrusion 81, and then, is distributed into each of the plurality of air flowing ways 43 that are arranged around the guiding protrusion 81. The semi-clean air passes through each of the plurality of air flowing ways 43, and then, enters an upper portion of each of the plurality of second cyclone bodies 61 through the air inlet 65.

The semi-clean air that enters into the upper portion of the second cyclone body 61 forms a downwardly whirling air current inside the second cyclone body 61. Then, fine contaminants are separated from the semi-clean air forming the downwardly whirling air current by centrifugal force. The separated fme contaminants fall along an inside surface of the second cyclone bodies 61, and then, are discharged into the second contaminants chamber 70 through the bottom end of the second cyclone body 61 so as to be collected in the second contaminants chamber 70 as illustrated by arrow B in Fig. 3. Also, clean air having fine contaminants removed by centrifugal force goes upwardly so as to be discharged through the air-discharging pipe 66.

The operation described above occurs in each of the plurality of second cyclones 60. Therefore, fine contaminants are removed from the semi-clean air in each of the plurality of second cyclone bodies 61, and clean air having fine contaminants removed is discharged through each of the plurality of air-discharging pipes 66. Clean air that is discharged from each of the plurality of air-discharging pipes 66 passes through the vacuum generator 131, and then, is discharged outside the cleaner body 130.

When the air gathering member (not shown) is disposed above the plurality of air-discharging pipes 66, air being discharged from each of the plurality of air-discharging pipes 66 is gathered each other by the air gathering member, and then, flows to the vacuum generator 131.

A user can easily know whether the first contaminants chamber 30 is filled with contaminants because at least some part of the outside receptacle 31 is made from transparent material. The amount of fine contaminants that are discharged from each of the second cyclones 60 and are collected in the second contaminants chamber 70 is much less than the amount of contaminants that are discharged from the first cyclone 10 so that the first contaminants chamber 30 is filled with contaminants before the second contaminants chamber 70 is filled with fine contaminants.

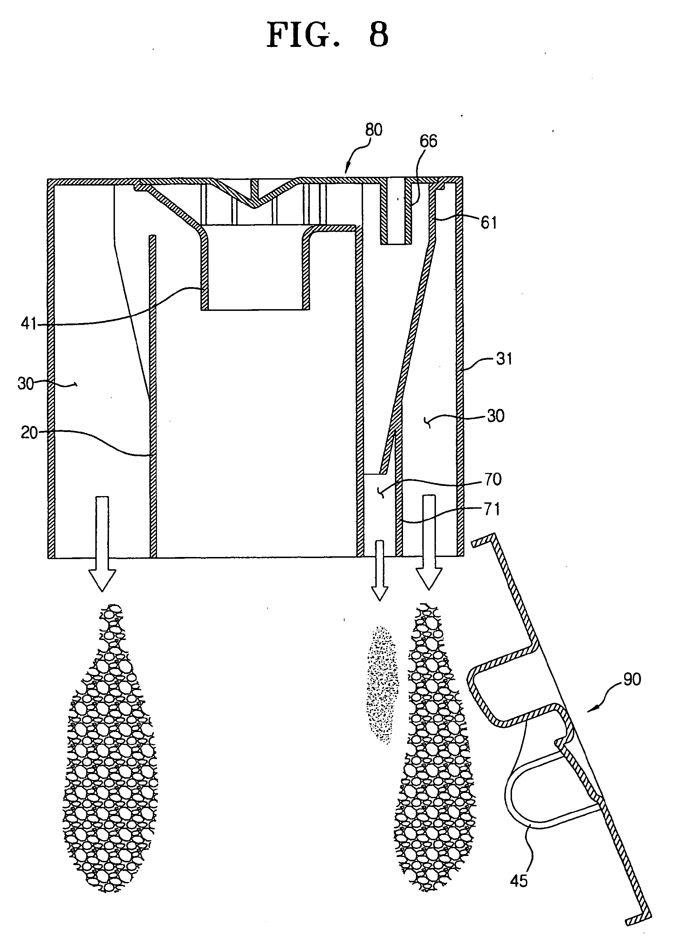

When emptying the first contaminants chamber 30; a user opens only the bottom cover 90. When the bottom cover 90 is opened, contaminants collected in each of the first contaminants chamber 30 and the second contaminants chamber 70 are discharged as shown in Fig. 8.

Furthermore, in the multi-cyclone dust collector 1 for the vacuum cleaner, the first cyclone 10 is in fluid communication with the first contaminants chamber 30 by the narrow contaminants discharging opening 25 that is formed between the top end and the top surface 22 of the first cyclone body 20. Therefore, when the multi-cyclone dust collector 1 is inclined, it is hard for contaminants collected in the first contaminants chamber 30 to flow back into the first cyclone body 20.

Hereinafter, an example of a vacuum cleaner 100 having a multi-cyclone dust collector 101 according to an embodiment of the present invention described above is explained.

Referring to Fig. 9, the vacuum cleaner 100 according to an embodiment of the present invention includes a suction brush 110, an extension pipe 121, a flexible hose 122, and a cleaner body 130.

The suction brush 110 has, at bottom surface, a dust suction opening (not shown) that sucks in contaminants-laden air from the cleaning floor.

The extension pipe 121 and the flexible hose 122 make the suction brush 110 in fluid communication with the cleaner body 130 so as to form a pathway through which contaminants-laden air sucked into the suction brush 110 moves to the multi-cyclone dust collector 101. A handle 120 is disposed at an upper portion of the extension pipe 121 so that a user grasps the handle 120 when in use. A power switch 123 is disposed on the handle 120 so that the power switch 123 turns on the vacuum cleaner 100.

The cleaner body 130 includes a vacuum generator 131 and a multi-cyclone dust collector 101. The vacuum generator 131 generates a suction force to suck contaminants-laden air via the suction brush 110, and is in fluid communication with the multi-cyclone dust collector 101. The multi-cyclone dust collector 101 separates contaminants from the contaminants-laden air that is sucked via the suction brush 110, and collects the separated contaminants. The multi-cyclone dust collector 101 employs a first cyclone that forms the contaminants-laden air an upwardly whirling air current so as to separate comparatively large contaminants, a first contaminants chamber that collects contaminants separated in the first cyclone, and a second cyclone unit that forms air being discharged from the first cyclone a downwardly whirling air current so as to separate and collect fine contaminants. The structure and operation of the multi-cyclone dust collector 101 is the same as the multi-cyclone dust collector 1 described above, so a detailed description thereof is not repeated for conciseness.

Therefore, upon turning on the vacuum cleaner 100 and then moving the suction brush 110 on a cleaning surface, contaminants on the cleaning floor are sucked into the dust suction opening of the suction brush 110 by suction force of the vacuum generator 131. The contaminants sucked through the suction brush 110 enter the multi-cyclone dust collector 101 through the extension pipe 121 and the flexible hose 122. The contaminants entered the multi-cyclone dust collector 101 are separated and collected by the first cyclone 10 (see Fig. 2) and the second cyclone units 50 (see Fig. 2). Clean air having contaminants removed is discharged out of the cleaner body 130.

In the above description, a canister type vacuum cleaner is used as an example of vacuum cleaners employing the multi-cyclone dust collector according to an embodiment of the present invention; however, this should not be considered as limiting. Various types of vacuum cleaners such as an upright type vacuum cleaner may employ the multi-cyclone dust collector according to an embodiment of the present invention.

While the embodiments of the present invention have been described, additional variations and modifications of the embodiments may occur to those skilled in the art once they learn of the basic inventive concepts. Therefore, it is intended that the appended claims shall be construed to include both the above embodiments and all such variations and modifications that fall within the spirit and scope of the invention, as defined by the appended claims.

## Claims

1. A muti-cyclone dust collector (1) for a vacuum cleaner, comprising:
a first cyclone (10) forcing contaminants-laden air that is drawn-in at a lower portion of the first cyclone (10) to form an upwardly whirling air current so as to centrifugally separate contaminants therefrom;
a first contaminants chamber (30) wrapping around a first part of the first cyclone (10), the first contaminants chamber (30) collecting contaminants discharged from the first cyclone (10); and
a second cyclone unit (50) wrapping around a second part of the first cyclone (10), the second cyclone unit (50) having a plurality of second cyclones (60), **characterized in that** each of the plurality of second cyclones (60) draws-in semi-clean air discharged from the first cyclone (10) at an upper portion of each of the plurality of second cyclones (60) so as to centrifugally separate fine contaminants from the semi-clean air.

2. The multi-cyclone dust collector (I) of claim 1, wherein the first contaminants chamber (30) wraps around the second cyclone unit (50).

3. The multi-cyclone dust collector (1) of any of claims 1 and 2, wherein the first cyclone (10) comprises:
a first cyclone body (20) being formed in a substantially hollow cylindrical shape for the contaminants-laden air to whirl inside the first cyclone body (20);
an air communicating member (40) being disposed at an upper side of the first cyclone body (20), the air communicating member (40) discharging the semi-clean air to the plurality of second cyclones (60); and an air suction port (45) being disposed at the lower portion of the first cyclone body (20), the air suction port (45) forming the contaminants-laden air the upwardly whirling air current.

4. The multi-cyclone dust collector (1) of claim 3, wherein the air communicating member (40) comprises:
an air communicating pipe (41) being formed in a substantially hollow cylindrical shape with opposite opened ends; and
a plurality of air guiding parts (42) being connected to a top end of the air communicating pipe (41), the plurality of air guiding parts (42) forming a plurality of air flowing ways corresponding to the plurality of second cyclones (60).

5. The multi-cyclone dust collector (1) of claim 4, further comprising a guiding protrusion (81) disposed at a center of the top end of the air communicating pipe (41).

6. The multi-cyclone dust collector (1) of any of claims 1 to 5, wherein the second cyclone unit (50) further comprises a second contaminants chamber (70) that is disposed under the plurality of second cyclones (60) so as to collect the fine contaminants discharged from each of the plurality of second cyclones (60).

7. The multi-cyclone dust collector (1) of claim 6, wherein the second contaminants chamber (70) is formed as a space between the first cyclone (10) and a partition (71), which wraps around the plurality of second cyclones (60) at the outside and opposite side ends of which are connected to the first cyclone (10),
wherein the first contaminants chamber (30) is formed as a space between the partition (71), an outside receptacle (31) that wraps around entirely the plurality of second cyclones (60) and the first cyclone (10), and some part of a circumferential surface of the first cyclone (10) that is not wrapped around by the partition (71).

8. The multi-cyclone dust collector (1) of any of claims 1 to 7, further comprising:
a bottom cover (90) detachably mounted on a bottom end of each of the first cyclone (10), the first contaminants chamber (30), and the second cyclone unit (50).

9. The multi-cyclone dust collector (1) of claim 1, wherein the first contaminants chamber (30) wraps entirely around the first cyclone (10) and the second cyclone unit (50).

10. The multi-cyclone dust collector (1) of claim 9, wherein the first cyclone (10) comprises a plurality of cyclones.

11. The multi-cyclone dust collector (1) of any of claims 9 and 10, wherein each of the plurality of second cyclones (60) comprises a second cyclone body, and
wherein a bottom end of the second cyclone body (61) is inclined in a direction of the first cyclone (10) with respect to a top end of the seconds cyclone body (61).

12. The multi-cyclone dust collector (1) of any of claims 9 to 11, further comprising:
a partition (71) wrapping around under portions of the plurality of second cyclones (60) along the first cyclone (10) in a side of the plurality of second cyclones (60).

13. A multi-cyclone dust collector (1) of claim 1,
wherein the first cyclone (10) forces the contaminants-laden air to whirl, discharges contaminants that are separated from the contaminants-laden air to the first contaminants chamber (30) through an opened top end of the first cyclone (10), and discharges semi-clean air having contaminants removed to an upper side of the first cyclone (10).

14. The multi-cyclone dust collector (1) of claim 12, wherein the at least one second cyclone (60) forces the semi-clean air that is discharged from the first cyclone (10) at an upper portion of the second cyclone (60) to whirl, discharges fine contaminants separated from the semi-clean air through an opened bottom end of the second cyclone (60), and discharges clean air having fine contaminants removed to an upper portion of the second cyclone (60).

15. The multi-cyclone dust collectors (1) of any of claims 12 and 13, further comprising a contaminants discharging opening (25) formed at a top end of the circumferential surface of the first cyclone (10) that is not wrapped around by the plurality of second cyclones (60) for discharging contaminants from the first cyclone (10).

16. The multi-cyclone dust collector (11) of claim 1, wherein the first cyclone (10) comprises a plurality of air suction ports (45) disposed at a bottom surface thereof,
wherein the contaminants-laden air enters into the first cyclone (10) through the plurality of air suction ports (45).

17. The multi-cyclone dust collector (1) of claim 16, wherein each of the plurality of air suction ports (45) is formed in a helical pipe shape and has a same helical direction.

18. The multi-cyclone dust collector (1) of claim 1, comprising a cyclone main body (3) comprising;
- the first cyclone (10);
- the first contaminants chamber (30)
- the plurality of second cyclones (60);
- a second contaminants chamber (70) collecting fine contaminants discharged from each of the plurality of second cyclones (60); and
- an air communicating member (40) guiding semi-clean air that is discharged from the first cyclone (10) to each of the plurality of second cyclones (60);
an upper cover (80) having a plurality of air-discharging pipes (66) corresponding each of the plurality of second cyclones (60), the upper cover (80) disposed at an top end of the cyclone main body (3); and
a bottom cover (90) having at least one air suction port (45) through which outside air enters the at least one first cyclone (10), the bottom cover (90) being detachably mounted at a bottom end of the cyclone main body (3).

19. The multi-cyclone dust collector (1) of claim 18, wherein the at least one first cyclone (10), the first contaminants chamber (30), the plurality of second cyclones (60), and the second contaminants chamber (70) are molded in one piece by injection molding process.

20. The multi-cyclone dust collector (1) of any of claims 18 and 19, wherein the at least one air suction port (45) is formed in a substantially helical shape.

21. The multi-cyclone dust collector (1) of any of claims 19 and 20, wherein the at least one first cyclone (10) has a cylindrical first cyclone body (20), each of the plurality of second cyclones (60) has a second cyclone body (61) with a reversed substantially conical shape, and at least one of the plurality of second cyclone bodies (61) shades some part thereof with the first cyclone body (20).

## Patentansprüche

1. Multizyklon-Staubsammler (1) für einen Staubsauger, der Folgendes umfasst:
einen ersten Zyklon (10), der mit Schmutzstoffen beladene Luft, die an einem unteren Abschnitt des ersten Zyklons (10) eingezogen wird, dazu zwingt, einen nach oben wirbelnden Luftstrom zu bilden, um Schmutzstoffe zentrifugal davon abzuscheiden;
eine erste Schmutzstoffkammer (30), die einen ersten Teil des ersten Zyklons (10) umhüllt, wobei die erste Schmutzstoffkammer (30) von dem ersten Zyklon (10) ausgestoßene Schmutzstoffe sammelt; und
eine zweite Zykloneinheit (50), die einen zweiten Teil des ersten Zyklons (10) umhüllt, wobei die zweite Zykloneinheit (50) mehrere zweite Zyklone (60) aufweist, **dadurch gekennzeichnet, dass** jeder der mehreren zweiten Zyklone (60) von dem ersten Zyklon (10) an einem oberen Abschnitt von jedem der mehreren zweiten Zyklone (60) ausgestoßene teilsaubere Luft einzieht, um Feinschmutzstoffe zentrifugal von der halbsauberen Luft abzuscheiden.

2. Multizyklon-Staubsammler (1) nach Anspruch 1, wobei die erste Schmutzstoffkammer (30) die zweite Zykloneinheit (50) umhüllt.

3. Multizyklon-Staubsammler (1) nach einem der Ansprüche 1 und 2, wobei der erste Zyklon (10) Folgendes umfasst:
einen ersten Zyklonkörper (20), der in einer im Wesentlichen hohlen zylindrischen Form gebildet ist, damit die mit Schmutzstoffen beladene Luft in dem ersten Zyklonkörper (20) wirbelt;
ein Luftübertragungselement (40), das an einer Oberseite des ersten Zyklonkörpers (20) angeordnet ist, wobei das Luftübertragungselement (40) die halbsaubere Luft zu den mehreren zweiten Zyklonen (60) ausstößt; und einen Luftansaugkanal (45), der an dem unteren Abschnitt des ersten Zyklonkörpers (20) angeordnet ist, wobei mit dem Luftansaugkanal (45) die mit Schmutzstoffen beladene Luft den nach oben wirbelnden Luftstrom bildet.

4. Multizyklon-Staubsammler (1) nach Anspruch 3, wobei das Luftübertragungselement (40) Folgendes umfasst:
ein Luftübertragungsrohr (41), das in einer im Wesentlichen höhlen zylindrischen Form mit gegenüberliegenden geöffneten Enden gebildet ist; und
mehrere Luftleitteile (42), die mit einem oberen Ende des Luftübertragungsrohrs (41) verbunden sind, wobei die mehreren Luftleitteile (42) mehrere Luftströmungswege bilden, die den mehreren zweiten Zyklonen (60) entsprechen.

5. Multizyklon-Staubsammler (1) nach Anspruch 4, weiter umfassend einen Leitvorsprung (81), der an einer Mitte des oberen Endes des Luftübertragungsrohrs (41) angeordnet ist.

6. Multizyklon-Staubsammler (1) nach einem der Ansprüche 1 bis 5, wobei die zweite Zykloneinheit (50) weiter eine zweite Schmutzstoffkammer (70) umfasst, die unter den mehreren zweiten Zyklonen (60) angeordnet ist, um die von jedem der mehreren zweiten Zyklone (60) ausgestoßenen Feinschmutzstoffe zu sammeln.

7. Multizyklon-Staubsammler (1) nach Anspruch 6, wobei die zweite Schmutzstoffkammer (70) als ein Raum zwischen dem ersten Zyklon (10) und einer Trennwand (71) gebildet ist, die die mehreren zweiten Zyklone (60) außen umhüllt und deren Enden auf gegenüberliegenden Seiten mit dem ersten Zyklon (10) verbunden sind,
wobei die erste Schmutzstoffkammer (30) als ein Raum zwischen der Trennwand (71), einem äußeren Behälter (31), der die mehreren zweiten Zyklone (60) und den ersten Zyklon (10) vollständig umhüllt und irgendeinem Tei! einer Umfangsfläche des ersten Zyklons (10), der nicht von der Trennwand (71) um umhüllt ist, gebildet ist.

8. Multizyklon-Staubsammler (1) nach einem der Ansprüche 1 bis 7, weiter umfassend:
eine untere Abdeckung (90), die abnehmbar an einem unteren Ende des ersten Zyklons (10), der ersten Schmutzstoffkammer (30) und der zweiten Zykloneinheit (50) angebracht ist.

9. Multizyklon-Staubsammler (1) nach Anspruch 1, wobei die erste Schmutzstoffkammer (30) den ersten Zyklon (10) und die zweite Zykioneinheit (50) vollständig umhüllt.

10. Multizyklon-Staubsammler (1) nach Anspruch 9, wobei der erste Zyklon (10) mehrere Zyklone umfasst.

11. Multizyklon-Staubsammler (1) nach einem der Ansprüche 9 und 10, wobei jeder der mehreren zweiten Zyklone (60) einen zweiten Zyklonkörper umfasst, und
wobei ein unteres Ende des zweiten Zyklonkörpers (61) in Bezug auf ein oberes Ende des zweiten Zyklonkörpers (61) in einer Richtung des ersten Zyklons (10) geneigt ist.

12. Multizyklon-Staubsammler (1) nach einem der Ansprüche 9 bis 11, weiter umfassend:
eine Trennwand (71), die unter Abschnitten der mehreren zweiten Zyklone (60) entlang dem ersten Zyklon (10) in einer Seite der mehreren zweiten Zyklone (60) herum gehüllt ist

13. Multizyklon-Staubsammler (1) nach Anspruch 1,
wobei der erste Zyklon (10) die mit Schmutzstoffen beladene Luft zum Wirbeln zwingt, Schmutzstoffe, die von der mit Schmutzstoffen beladenen Luft abgeschieden sind, durch ein geöffnetes oberes Ende des ersten Zyklons (10) zu der ersten Schmutzstoffkammer (30) ausstößt, und halbsaubere Luft, von der Schmutzstoffe entfernt wurden, zu einer oberen Seite des ersten Zyklons (10) ausstößt.

14. Multizyklon-Staubsammler (1) nach Anspruch 12, wobei der mindestens eine zweite Zyklon (60) die von dem ersten Zyklon (10) an einem oberen Abschnitt des zweiten Zyklons (60) ausgestoßene halbsaubere Luft zum Wirbeln zwingt, von der halbsauberen Luft abgeschiedene Feinschmutzstoffe durch ein geöffnetes unteres Ende des zweiten Zyklons (60) ausstößt und saubere Luft, von der Feinschmutzstoffe entfernt wurden, zu einem oberen Abschnitt des zweiten Zyklons (60) ausstößt

15. Multizyklon-Staubsammler (1) nach einem der Ansprüche 12 und 13, weiter umfassend eine Schmutzstoff-Ausstoßöffnung (25) die an einem oberen Ende der Umfangsfläche des ersten Zyklons (10) gebildet ist, das nicht von den mehreren zweiten Zyklonen (60) umhüllt ist, um Schmutzstoffe von dem ersten Zyklon (10) auszustoßen.

16. Multizyklon-Staubsammier (1) nach Anspruch 1, wobei der erste Zyklon (10) mehrere Luftansaugkanäle (45) umfasst, die an einer unteren Fläche desselben angeordnet sind, wobei die mit Schmutzstoffen beladene Luft durch die mehreren Luftansaugkanäle (45) in den ersten Zyklon (10) eintritt.

17. Multizyklon-Staubsammler (1) nach Anspruch 16, wobei jeder der mehreren Luftansaugkanäle (45) in einer Spiralrohrform gebildet ist und eine gleiche Spiralrichtung aufweist.

18. Multizyklon-Staubsammler (1) nach Anspruch 1, umfassend einen Zyklonhauptkörper (3), der Folgendes umfasst:
- den ersten Zyklon (10);
- die erste Schmutzstoffkammer (30)
- die mehreren zweiten Zyklone (60);
- eine zweite Schmutzstoffkammer (70), die von jedem der mehreren zweiten Zyklone (60) ausgestoßene Feinschmutzstoffe sammelt; und
- ein Luftübertragungselement (40), das halbsaubere Luft leitet, die von dem ersten Zyklon (10) zu jedem der zweiten Zyklone (60) ausgestoßen wird;
eine obere Abdeckung (80) mit mehreren Luftausstoßrohren (66), die jedem der mehreren zweiten Zyklone (60) entsprechen, wobei die obere Abdeckung (80) an einem oberen Ende des Zyklonhauptkörpers (3) angeordnet ist; und
eine untere Abdeckung (90) mit mindestens einem Luftansaugkanal (45), durch den Außenluft in den mindestens einen ersten Zyklon (10) eintritt, wobei die untere Abdeckung (90) abnehmbar an einem unteren Ende des Zyklonhauptkörpers (3) angebracht ist.

19. Multizyklon-Staubsammler (1) nach Anspruch 18, wobei der mindestens eine erste Zyklon (10), die erste Schmutzstoffkammer (30), die mehreren zweiten Zyklone (60) und die zweite Schmutzstoffkammer (70) durch ein Spritzgussverfahren in einem Stück geformt sind.

20. Multizyklon-Staubsammler (1) nach einem der Ansprüche 18 und 19, wobei der mindestens eine Luftansaugkanal (45) in einer im Wesentlichen spiralförmigen Form gebildet ist.

21. Multizyklon-Staubsammler (1) nach einem der Ansprüche 19 und 20, wobei der mindestens eine erste Zyklon (10) einen zylindrischen ersten Zyklonkörper (20) aufweist, wobei jeder der mehreren zweiten Zyklone (60) einen zweiten Zyklonkörper (61) mit einer umgekehrten im Wesentlichen konischen Form aufweist und wobei mindestens einer der mehreren zweiten Zyklonkörper (61) irgendeinen Teil desselben mit dem ersten Zyklonkörper (20) gemeinsam hat.

## Revendications

1. Collecteur de poussière à cyclones multiples (1) pour un aspirateur, comprenant :
un premier cyclone (10) entraînant l'air chargé de contaminants qui est aspiré au niveau d'une partie inférieure du premier cyclone (10) à former un courant d'air tourbillonnant vers le haut de sorte à séparer les contaminants de celui-ci par centrifugation
une première chambre de contaminants (30) entourant une première partie du premier cyclone (10), la première chambre de contaminants (30) collectant les contaminants déchargés du premier cyclone (10) ; et
une seconde unité de cyclones (50) entourant une seconde partie du premier cyclone (10), la seconde unité de cyclones (50) ayant une pluralité de seconds cyclones (60), **caractérisé en ce que** chacun de la pluralité de seconds cyclones (60) aspire l'air semi-propre déchargé du premier cyclone (10) au niveau d'une partie supérieure de chacun de la pluralité de seconds cyclones (60) de sorte à séparer par centrifugation les contaminants fins de l'air semi-propre.

2. Collecteur de poussière à cyclones multiples (1) selon la revendication 1, dans lequel la première chambre de contaminants (30) entoure la seconde unité de cyclones (50).

3. Collecteur de poussière à cyclones multiples (1) selon l'une quelconque des revendications 1 et 2, dans lequel le premier cyclone (10) comprend :
un premier corps de cyclone (20) ayant une forme cylindrique sensiblement creuse pour que l'air chargé de contaminants tourbillonne à l'intérieur du premier corps de cyclone (20) ;
un élément communiquant avec l'air (40) étant disposé sur un côté supérieur du premier corps de cyclone (20), l'élément communiquant avec l'air (40) déchargeant l'air semi-propre vers la pluralité de seconds cyclones (60) ; et un orifice d'aspiration d'air (45) étant disposé sur la partie inférieure du premier corps de cyclone (20), l'orifice d'aspiration d'air (45) entraînant l'air chargé de contaminants à former le courant d'air tourbillonnant vers le haut.

4. Collecteur de poussière à cyclones multiples (1) selon la revendication 3, dans lequel l'élément communiquant avec l'air (40) comprend :
un tuyau communiquant avec l'air (41) ayant une forme cylindrique sensiblement creuse avec des extrémités ouvertes opposées ; et
une pluralité de parties de guidage d'air (42) étant reliées à une extrémité supérieure du tuyau communiquant avec l'air (41), la pluralité de parties de guidage de l'air (42) formant une pluralité de voies de circulation d'air correspondant à la pluralité de seconds cyclones (60).

5. Collecteur de poussière à cyclones multiples (1) selon la revendication 4, comprenant en outre une saillie de guidage (81) disposée au centre de l'extrémité supérieure du tuyau communiquant avec l'air (41).

6. Collecteur de poussière à cyclones multiples (1) selon l'une quelconque des revendications 1 à 5, dans lequel la seconde unité de cyclone (50) comprend en outre une seconde chambre de contaminants (710) qui est disposée sous la pluralité de seconds cyclones (60) afin de collecter les contaminants fins déchargés de chacun de la pluralité de seconds cyclones (60).

7. Collecteur de poussière à cyclones multiples (1) selon la revendication 6, dans lequel la seconde chambre de contaminants (70) se présente sous la forme d'un espace entre le premier cyclone (10) et une cloison (71), qui entoure la pluralité de seconds cyclones (60) à l'extérieur et dont les extrémités latérales et opposées sont reliées au premier cyclone (10),
dans lequel la première chambre de contaminants (30) se présente sous forme d'un espace entre la cloison (71), un récipient extérieur (31) qui entoure entièrement la pluralité de seconds cyclones (60) et le premier cyclone (10) et une partie d'une surface circonférentielle du premier cyclone (10) qui n'est pas entourée par la cloison (71).

8. Collecteur de poussière à cyclones multiples (1) selon l'une quelconque des revendications 1 à 7, comprenant en outre :
un cache inférieur (90) monté de manière détachable sur une extrémité inférieure de chacun du premier cyclone (10), de la première chambre de contaminants (30) et de la seconde unité de cyclones (50).

9. Collecteur de poussière à cyclones multiples (1) selon la revendication 1, dans lequel la première chambre de contaminants (30) entoure entièrement le premier cyclone (10) et la seconde unité de cyclones (50).

10. Collecteur de poussière à cyclones multiples (1) selon la revendication 9, dans lequel le premier cyclone (10) comprend une pluralité de cyclones.

11. Collecteur de poussière à cyclones multiples (1) selon l'une quelconque des revendications 9 et 10, dans lequel chacun de la pluralité de seconds cyclones (60) comprend un second corps de cyclone, et
dans lequel une extrémité inférieure du second corps de cyclone (61) est inclinée dans une direction du premier cyclone (10) par rapport à une extrémité supérieure du second corps de cyclone (61).

12. Collecteur de poussière à cyclones multiples (1) selon l'une quelconque des revendications 9 à 11, comprenant en outre :
une cloison (71) entourant les parties inférieures de la pluralité de seconds cyclones (60) le long du premier cyclone (10) d'un côté de la pluralité de seconds cyclones (60).

13. Collecteur de poussière à cyclones multiples (1) selon la revendication 1,
dans lequel le premier cyclone (10) entraîne l'air chargé de contaminants à tourbillonner, décharge les contaminants qui sont séparés de l'air chargé de contaminants vers la première chambre de contaminants (30) à travers une extrémité supérieure ouverte du premier cyclone (10) et décharge l'air semi-propre dont les contaminants ont été éliminés vers un côté supérieur du premier cyclone (10).

14. Collecteur de poussière à cyclones multiples (1) selon la revendication 12, dans lequel l'au moins un second cyclone (60) entraîne l'air semi-propre qui est déchargé du premier cyclone (10) au niveau d'une partie supérieure du second cyclone (60) à tourbillonner, décharge les contaminants fins séparés de l'air semi-propre à travers une extrémité inférieure ouverte du second cyclone (60), et décharge l'air propre dont les contaminants fins ont été éliminés vers une partie supérieure du second cyclone (60).

15. Collecteur de poussière à cyclones multiples (1) selon l'une quelconque des revendications 12 et 13, comprenant en outre une ouverture de décharge de contaminants (25) formée à une extrémité supérieure de la surface circonférentielle du premier cyclone (10) qui n'est pas entourée par la pluralité de seconds cyclones (60) pour décharger les contaminants du premier cyclone (10).

16. Collecteur de poussière à cyclones multiples (1) selon la revendication 1, dans lequel le premier cyclone (10) comprend une pluralité d'orifices d'aspiration d'air (45) disposés sur sa surface inférieure,
dans lequel l'air chargé de contaminants pénètre dans le premier cyclone (10) à travers la pluralité d'orifices d'aspiration d'air (45).

17. Collecteur de poussière à cyclones multiples (1) selon la revendication 16, dans lequel chacun de la pluralité d'orifices d'aspiration d'air (45) se présente sous la forme d'un tuyau hélicoïdal et a une même direction hélicoïdale.

18. Collecteur de poussière à cyclones multiples (1) selon la revendication 1, comprenant un corps principal de cyclone (3) comprenant ;
- le premier cyclone (10) ;
- la première chambre de contaminants (30)
- la pluralité de seconds cyclones (60) ;
- une seconde chambre de contaminants (70) collectant les contaminants fins déchargés de chacun de la pluralité de seconds cyclones (60) ; et
- un élément communiquant avec l'air (40) guidant l'air semi-propre qui est déchargé du premier cyclone (10) vers chacun de la pluralité de seconds cyclones (60) ;
un cache supérieur (80) ayant une pluralité de tuyaux d'évacuation d'air (66) correspondant à chacun de la pluralité de seconds cyclones (60), le cache supérieur (80) étant disposé à une extrémité supérieure du corps principal du cyclone (3) ; et
un cache inférieur (90) ayant au moins un orifice d'aspiration d'air (45) à travers lequel l'air extérieur pénètre dans l'au moins un premier cyclone (10), le cache inférieur (90) étant monté de manière détachable à une extrémité inférieure du corps principal de cyclone (3).

19. Collecteur de poussière à cyclones multiples (1) selon la revendication 18, dans lequel l'au moins un premier cyclone (10), la première chambre de contaminants (30), la pluralité de seconds cyclones (60) et la seconde chambre de contaminants (70) sont moulés d'un seul tenant grâce à un procédé de moulage par injection.

20. Collecteur de poussière à cyclones multiples (1) selon l'une quelconque des revendications 18 et 19, dans lequel l'au moins un orifice d'aspiration d'air (45) a une forme sensiblement hélicoïdale.

21. Collecteur de poussière à cyclones multiples (1) selon l'une quelconque des revendications 19 et 20, dans lequel l'au moins un premier cyclone (10) a un premier corps de cyclone cylindrique (20), chacun de la pluralité de seconds cyclones (60) a un second corps de cyclone (61) de forme sensiblement conique inversée et au moins l'un de la pluralité de seconds corps de cyclone (61) partage une partie de celui-ci avec le premier corps de cyclone (20).
